# EUROPEAN PATENT APPLICATION

(11) **EP 3 190 809 A1**
(43) Date of publication of application: **12.07.2017**
(21) Application number: 16205740.0
(22) Date of filing: 21.12.2016
(51) Int. Cl.: H04R 1/28

(54) **MICRO-SPEAKER HAVING AN AIR ADSORBENT WITH A BINDER**

(30) Priority: 31.12.2015 KR 20150191239
(71) Applicant: EM-Tech Co., Ltd., Busan 46241 (KR)
(72) Inventor: KANG, Ghi Yuun, 02875 Seoul (KR); KWON, Joong Hak, 50883 Gyeongsangnam-do (KR); CHOE, Hwan Ock, 51231 Gyeongsangnam-do (KR)
(74) Representative: Müller Hoffmann & Partner

(57) **Abstract**

The present invention relates to a micro-speaker for use in a small electronic device, and more particularly, to a micro-speaker having an air adsorbent which can increase the lifespan by the improvements in structure. The micro-speaker according to the present invention can improve sound pressure, sound quality and lifespan characteristics by preventing the air adsorbent from blocking vent holes, while enhancing low frequency characteristics by defining a virtual back volume by putting the air adsorbent into an enclosure.

## Description

### TECHNICAL FIELD

The present invention relates to a micro-speaker for use in a small electronic device, and more particularly, to a micro-speaker having an air adsorbent which can increase the lifespan by the improvements in structure.

### BACKGROUND ART

A speaker converts an electrical energy into a mechanical energy to generate sound, using a voice coil present in an air gap according to Fleming's left hand rule. Recently, with the wide spread of a small electronic device requiring a small internal speaker, such as a smartphone, there are increasing demands for a small and slim micro-speaker.

As the micro-speaker is limited in terms of a size, shape, location of a sound emitting hole, etc., a structure for obtaining high sound quality in a limited space has been taken into account. More specifically, an enclosure micro-speaker module has advantages in that the micro-speaker is disposed in an enclosure casing serving as a resonance space, this enclosure casing is mounted in an electronic device, and the sound generated by the micro-speaker is resonated in and emitted from the enclosure casing, which can thereby reduce sound interferences and improve sound quality and sound volume. In particular, the resonance space of the speaker is a critical factor in the low frequency characteristics, and the larger the resonance space is, the more easily the low frequency sound can be reproduced and the more the reproducible frequency range can be increased.

Recently, a micro-speaker having an air adsorbent starts to be developed to further enhance such low frequency characteristics. Zeolite or activated carbon is put into an enclosure to define a virtual back volume, i.e., a resonance space, using adsorption and desorption of air molecules. European patent 2424270, European patent publication 2015-0358721, and U.S. patent 8687836 disclose a speaker which uses zeolite to enhance the low frequency sound characteristics.

However, the conventional micro-speaker having the air adsorbent has a disadvantage in that the air adsorbent moves around in the enclosure, causing contamination to the other components of the micro-speaker in actual use. In general, the air adsorbent such as zeolite or activated carbon is artificially synthesized into powder and secondarily formed into granules. In use of the micro-speaker, such granules of the air adsorbent inevitably move to the other components, causing contamination. The contamination itself may degrade the performance of the micro-speaker such as by affecting the vibration of the diaphragm. In particular, the air adsorbent may escape from the resonance space of the enclosure, which leads to reduction of the virtual back volume effect. In addition, the air adsorbent may block vent holes between the resonance space and the inner space of the diaphragm of the micro-speaker, disturbing smooth air circulation, which means the degraded functionality of the resonance space.

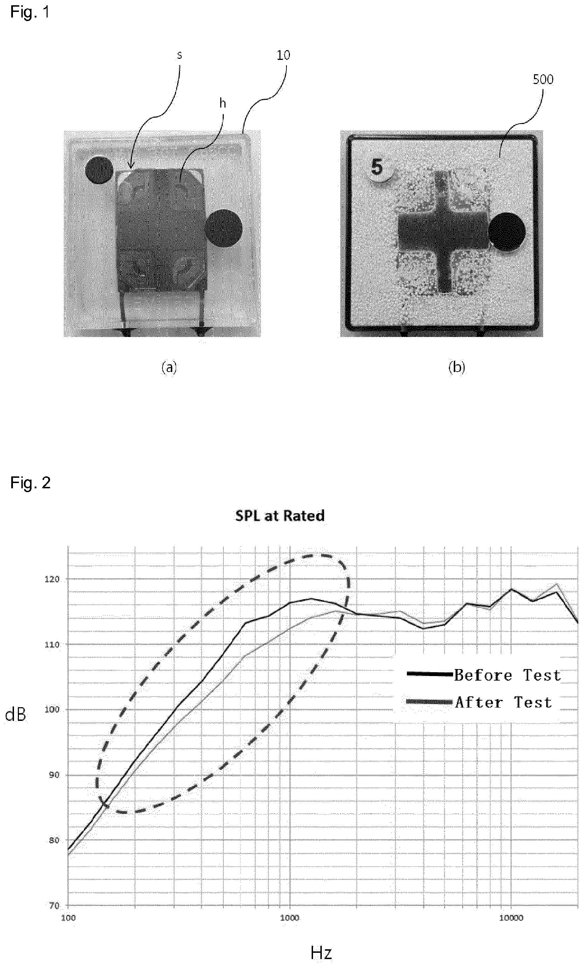

FIG. 1a and FIG. 1b are photographs showing results of an aging test performed on the conventional micro-speaker having the air adsorbent. That is, FIG. 1a shows the micro-speaker having the air adsorbent, before the aging test, where a speaker unit s is accommodated in an enclosure 10, and vent holes h are provided on the rear surface of the speaker unit s (before the insertion of the air adsorbent). FIG. 1 b is a photograph showing results of the aging test performed for an extended period of time after the insertion of the air adsorbent. It can be seen that a plurality of grains of an air adsorbent 500 block the vent holes h.

FIG. 2 is a graph showing changes in a sound pressure level (dB) based on frequencies (Hz) in use of the micro-speaker, before and after the aging test of FIG. 1. It can be seen that the low frequency sound pressure level is more or less lower after the aging test than before the aging test, as indicated by the dashed line. That is, the ability of the air adsorbent to enhance low frequency sound characteristics more or less decreases. As described above, the conventional micro-speaker having the air adsorbent has a disadvantage in that its performance is degraded after a certain period of use.

### DISCLOSURE OF THE INVENTION

The present invention has been made to solve the aforementioned problems in the prior art. An object of the present invention is to provide a micro-speaker which prevents an air adsorbent from blocking vent holes to reduce a sound pressure.

In addition, another object of the present invention is to provide a micro-speaker which prevents an air adsorbent from entering the other components of the micro-speaker, which leads to the improvements in durability and lifespan.

According to an aspect of the present invention for achieving the aforementioned objects, there is provided a micro-speaker including: a vibration module including at least a diaphragm and a voice coil; a magnetic module defining an empty space, adjoining the vibration module, and including at least a yoke and a magnet; an enclosure defining a resonance space therein and accommodating the vibration module and the magnetic module; a vent hole creating communication between the resonance space and the empty space between the vibration module and the magnetic module; an air adsorbent disposed at least on one side of the resonance space and composed of a plurality of grains; and a means for preventing inflow of the air adsorbent, that prevents the air adsorbent from entering the vent hole.

In some embodiments, the vent hole is provided on the yoke.

In some embodiments, the means for preventing inflow of the air adsorbent is a mesh type screen.

In some embodiments, the means for preventing inflow of the air adsorbent is a spongy type screen.

In some embodiments, the enclosure includes a rear cover adjoining the yoke, and the means for preventing inflow of the air adsorbent is a rib structure protruding from the rear cover to the yoke.

In some embodiments, the minimum distance between the rib structure and the yoke is greater than 0 mm and equal to or smaller than 0.1 mm.

In some embodiments, the means for preventing inflow of the air adsorbent is a binder for binding the plurality of grains of the air adsorbent together in any one method selected from a mechanical method, chemical method, and adhesive method.

In some embodiments, the binder is a mesh type pouch which mechanically covers and encloses the plurality of grains of the air adsorbent.

In some embodiments, the binder is an adhesive material which adheres the plurality of grains of the air adsorbent together.

According to another aspect of the present invention, a method for inserting an air adsorbent into a micro-speaker, the micro-speaker including an enclosure, a speaker unit accommodated in the enclosure, a resonance space defined between the speaker unit and the enclosure, and an air adsorbent disposed at least on one side of the resonance space and composed of a plurality of grains, the method including: putting the air adsorbent into a mold which is similar to the resonance space; applying a binder to the air adsorbent in the mold to bind the plurality of grains of the air adsorbent together; removing the mold; and putting the air adsorbent with the bound grains into the enclosure.

According to a further aspect of the present invention, there is provided a micro-speaker including: a vibration module including at least a diaphragm and a voice coil; a magnetic module defining an empty space, adjoining the vibration module, and including at least a yoke and a magnet; a frame accommodating and supporting at least one of the vibration module and the magnetic module; an enclosure defining a resonance space therein and accommodating the vibration module, the magnetic module, and the frame; and an air adsorbent disposed at least on one side of the resonance space and composed of a plurality of grains, a plurality of vent holes being provided on the lateral sides of the frame to create communication between the resonance space and the empty space between the vibration module and the magnetic module.

In some embodiments, at least one of the plurality of vent holes is open in a different direction from the other vent holes.

The micro-speaker according to the present invention can improve sound pressure, sound quality and lifespan characteristics by preventing the air adsorbent from blocking the vent holes, while enhancing low frequency characteristics by defining a virtual back volume by putting the air adsorbent into the enclosure.

### BRIEF DESCRIPTION OF THE DRAWINGS

The above and other objects, features and advantages of the present invention will become apparent from the following description of a preferred embodiment given in conjunction with the accompanying drawings, in which:
FIG. 1a and FIG. 1b are photographs showing results of an aging test performed on a conventional micro-speaker having an air adsorbent.
FIG. 2 is a graph showing changes in a sound pressure level based on frequencies in use of the micro-speaker, before and after the aging test of FIG. 1.
FIG. 3 is a sectional view showing a general structure of the conventional micro-speaker having the air adsorbent.
FIG. 4 is an exploded perspective view showing the micro-speaker of FIG. 3.
FIG. 5 is a partial enlarged sectional view diagrammatically showing the problems that may occur in the conventional micro-speaker using the air adsorbent.
FIG. 6 is an exploded perspective view showing a rear cover 11 of the conventional micro-speaker 1 using the air adsorbent.
FIG. 7 is a partial enlarged sectional view showing a micro-speaker having an air adsorbent according to an embodiment of the present invention.
FIG. 8 is a partial enlarged sectional view showing a micro-speaker having an air adsorbent according to another embodiment of the present invention.
FIG. 9 is a partial enlarged sectional view showing a micro-speaker having an air adsorbent according to a further embodiment of the present invention.
FIG. 10 is a partial enlarged sectional view showing a micro-speaker having an air adsorbent according to a still further embodiment of the present invention.
FIGS. 11 a and 11 b are a perspective view showing a mold 600 for use in a method for inserting an air adsorbent into a micro-speaker according to an embodiment of the present invention and a sectional view schematically showing steps of an implementation of the present method, respectively.
FIG. 12 is a perspective view showing a frame 40' in a micro-speaker according to a still further embodiment of the present invention.

### BEST MODE FOR CARRYING OUT THE INVENTION

Hereinafter, preferred embodiments of a micro-speaker having an air adsorbent according to the present invention will be described in detail with reference to the accompanying drawings. In the description, some reference numerals can be omitted for readability of the drawings in the case of equivalent structures or identical constructions being easily recognizable in the drawings.

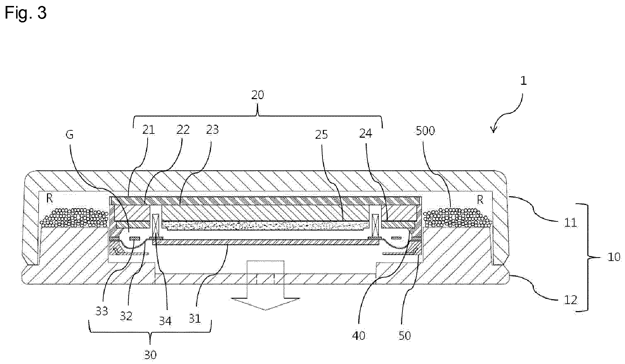

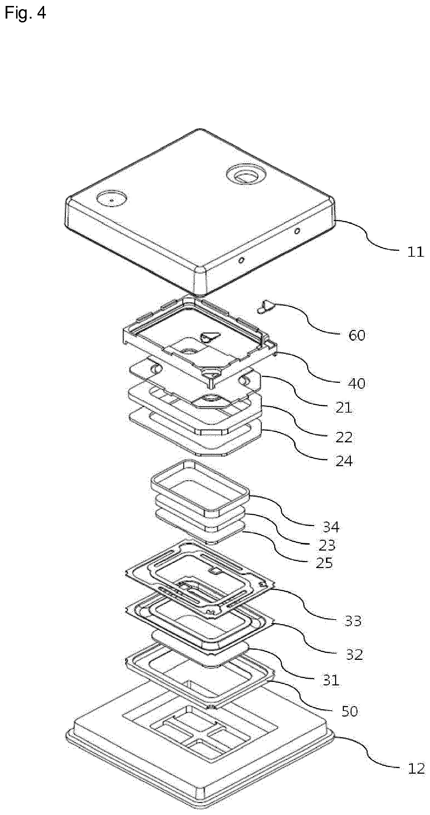

FIG. 3 is a sectional view showing a general structure of a conventional micro-speaker having an air adsorbent, and FIG. 4 is an exploded perspective view showing the micro-speaker of FIG. 3 (air adsorbent is not shown). The micro-speaker 1 having the air adsorbent includes an enclosure 10 composed of a front cover 12 and a rear cover 11. The enclosure 10 defines a resonance space R therein, while accommodating a vibration module 30 and a magnetic module 20 to be discussed later. A frame 40 and a yoke 21 are disposed in the enclosure, the frame 40 being open at the top and bottom to protect the other components accommodated therein, the yoke 21 being coupled to the frame 40 to be located at the rearmost end. An outer-ring magnet (permanent magnet 22) and an inner-ring magnet (permanent magnet 23) are attached to the yoke 21, and an outer-ring top plate 24 and an inner-ring top plate 25, which assist in generating a magnetic field, are attached on the magnets 22 and 23, respectively. In general, the yoke 21, the outer-ring magnet 22, the inner-ring magnet 23, the outer-ring top plate 24 and the inner-ring top plate 25 are collectively referred to as the magnetic module 20.

A voice coil 34 is disposed in a space between the outer-ring magnet 22 and the inner-ring magnet 23. Therefore, when an electric signal is applied to the voice coil 34, a mutual electromagnetic force is generated by a magnetic circuit formed by the magnets 22 and 23 and the yoke 21, so the voice coil 34 vibrates up and down depending on the electric signal. A center diaphragm 31 and a side diaphragm 32, which vibrate together with the voice coil 34 to generate sound, are supported by a suspension 33. The suspension 33 is coupled to the voice coil 34 to prevent biased vibration of the diaphragms 31 and 32 and made of an FPCB to transmit an electric signal between the voice coil 34 and an external terminal (not shown). Generally, the diaphragms 31 and 32, the suspension 33 and the voice coil 34 are collectively referred to as the vibration module 30.

A protector 50 is coupled to the frame 40 to accommodate and protect the other components. A connection terminal 60 transmits an electric sound signal to the suspension 33. An air adsorbent 500 is disposed at one side of the resonance space R in the enclosure 10 to define a virtual back volume. Zeolite is preferably used as the air adsorbent 500. More specifically, for ease of handling, zeolite is preferably secondarily formed into a plurality of grains, i.e., granules. The magnetic module 20 and the vibration module 30 are adjacent to each other, defining an empty space G therebetween. When an electric sound signal is introduced to the voice coil 34, the diaphragms 31 and 32 vibrate, and thus an instantaneous atmospheric pressure in the empty space G frequently varies. Here, a difference in the instantaneous atmospheric pressure between the empty space G and the resonance space R can be overcome by vent holes (not shown) which may be provided on the yoke 21 or the frame 40, such that the diaphragms 31 and 32 can smoothly vibrate, which leads to the improvements in sound quality by the air adsorbent 500 and the resonance space R. The resultant sound is finally emitted through a sound emitting hole as indicated by an arrow toward the front.

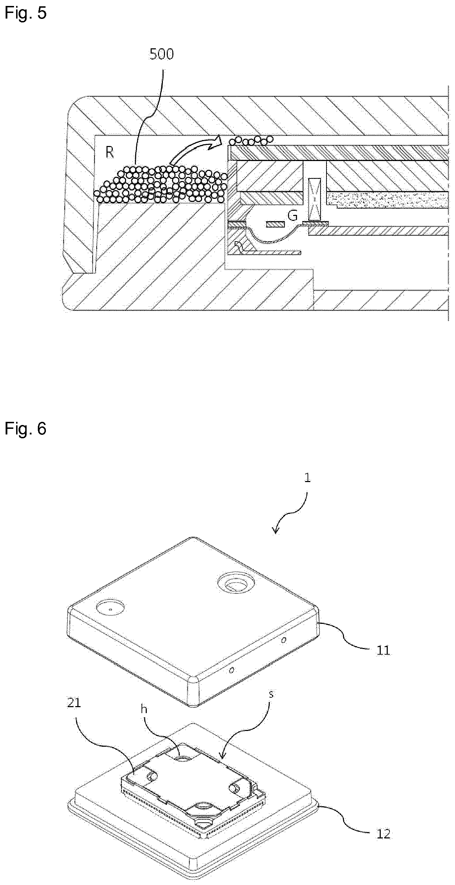

FIG. 5 is a partial enlarged sectional view diagrammatically showing again the problems that may occur in the conventional micro-speaker using the air adsorbent, and FIG. 6 is an exploded perspective view showing the rear cover 11 of the conventional micro-speaker 1 using the air adsorbent (air adsorbent is not shown). The air adsorbent 500 composed of the plurality of grains can move around in the resonance space R in actual use, and some may move to the vent holes (h in FIG. 6), blocking the air flow between the resonance space R and the empty space G between the vibration module 30 and the magnetic module 20, as shown in FIG. 5. Although the vent holes h are provided on the yoke 21 of the speaker unit s in the drawings, it will be apparent that they may be provided anywhere, so far as the resonance space R and the empty space G can communicate with each other.

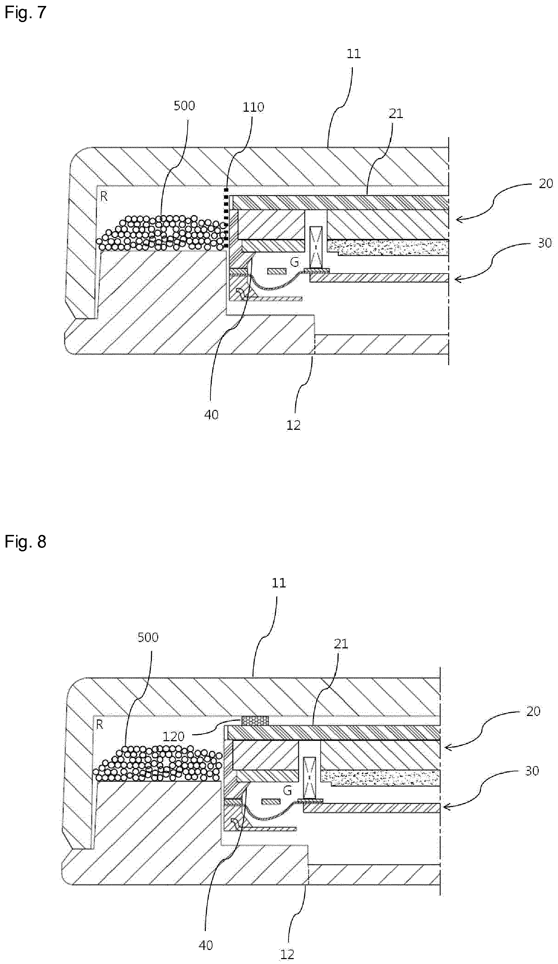

FIG. 7 is a partial enlarged sectional view showing a micro-speaker having an air adsorbent according to an embodiment of the present invention. The micro-speaker according to the present invention may have a means for preventing inflow of the air adsorbent, that prevents the air adsorbent 500 from entering vent holes (h; not shown). In this embodiment, the means for preventing inflow of the air adsorbent is a mesh type screen 110. The mesh type screen 110 serves to physically block a path for the air adsorbent composed of a plurality of grains to move to the vent holes h. Accordingly, so far as the mesh type screen 110 fulfills this function, it may be disposed along the lateral sides of a frame 40 as in this embodiment, or disposed to directly block the vent holes h, or disposed in different positions. Moreover, the mesh type screen 110 should preferably have holes smaller than the grains of the air adsorbent 500 to fulfill this function. This mesh type screen 110 can prevent the air adsorbent 500 from entering the vent holes h and an empty space G, without interfering with the air flow. For example, the structure of the present embodiment can be easily realized by attaching a double-sided adhesive tape (not shown) along the lateral sides of the frame 40 and attaching the mesh type screen 110 thereto.

FIG. 8 is a partial enlarged sectional view showing a micro-speaker having an air adsorbent according to another embodiment of the present invention. In this embodiment, a means for preventing inflow of the air adsorbent is a spongy type screen 120. Although not entirely illustrated in the drawing, if the spongy type screen 120 is disposed along the edges of a yoke 21 to block the whole space between the yoke 21 and a rear cover 11, it can prevent the air adsorbent 500 from entering vent holes (h; not shown) and an empty space G while allowing the air flow. It will be apparent that the spongy type screen 120 may be disposed in different positions from the present embodiment, such as disposed along the lateral sides of a frame 40 as in the embodiment of FIG. 7.

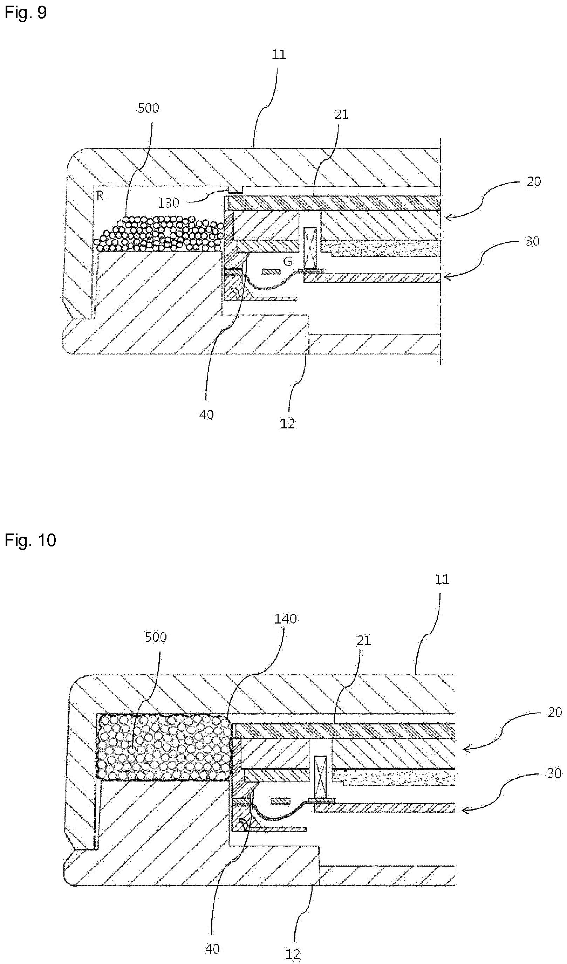

FIG. 9 is a partial enlarged sectional view showing a micro-speaker having an air adsorbent according to a further embodiment of the present invention. In this embodiment, a means for preventing inflow of the air adsorbent is a rib structure 130 protruding from a rear cover 11 to a yoke 21. That is, for example, if the rib structure 130 is provided on the rear cover 11, corresponding to the entire edges of the yoke 21, it can prevent the air adsorbent 500 from entering the vent holes (h; not shown) of the yoke 21. It will be apparent that the minimum distance between the rib structure 130 and the yoke should be smaller than the grain size of the air adsorbent 500 and should also be greater than 0 mm to allow air circulation. The grain size of the zeolite granules available on the market is about 0.2 mm, such that the minimum distance between the rib structure 130 and the yoke 21 is preferably greater than 0 mm and equal to or smaller than 0.1 mm.

According to a still further embodiment of the present invention, a means for preventing inflow of an air adsorbent may be a binder for binding a plurality of grains of the air adsorbent 500 together in a mechanical method, chemical method, or adhesive method (including bonding). That is, the binder herein implies a means for binding particles together in various methods.

For example, as shown in FIG. 10, the binder may be a mesh type pouch 140 which mechanically covers and encloses a plurality of grains of an air adsorbent 500. It will be apparent that the mesh type pouch 140 should preferably have holes smaller than the grains of the air adsorbent 500 to fulfill this function. Otherwise, in some embodiments, the binder may be an adhesive material (not shown) which adheres (bonds) the plurality of grains of the air adsorbent 500 together. Using the binder as the means for preventing inflow of the air adsorbent transforms the air adsorbent 500 into one or multiple sufficiently-large lumps, such that the binder can prevent the air adsorbent 500 from moving to another space in the micro-speaker, more specifically, to vent holes (h; not shown), while still allowing the air flow between the spaces.

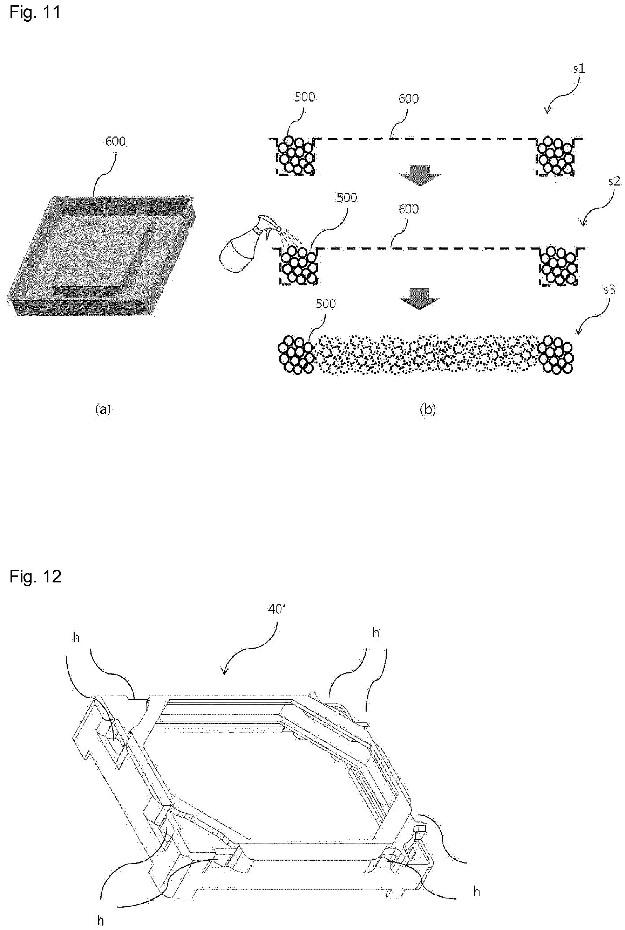

Fig. 11 is intended to explain a method for inserting an air adsorbent 500 in detail in connection with the above-described embodiments, wherein FIG. 11 a is a perspective view showing a mold 600 for use in the present method, and FIG. 11 b is a sectional view schematically showing steps of an implementation of the present method. The method for inserting the air adsorbent into the micro-speaker according to one embodiment of the present invention may firstly include a step s1 of putting the air adsorbent 500 into the mold 600 which is similar (or identical) to the resonance space R into which the air adsorbent 500 will be inserted. The method may further include a step s2 of applying a binder to the air adsorbent 500 in the mold 600, such as spraying an adhesive material, to bind a plurality of grains of the air adsorbent 500 together, and a step s3 of removing the mold 600 to extract the bound air adsorbent 500. In addition, although not illustrated in the drawings, the method may include a step of putting the air adsorbent 500 with the bound grains into the resonance space R of the enclosure. With the method of the above-described embodiment, it is possible to bind the air adsorbent 500 into lumps, using the binder, to prevent the air adsorbent 500 from moving to another space in the micro-speaker.

FIG. 12 is a perspective view showing a frame 40' in a micro-speaker according to a still further embodiment of the present invention, where a plurality of vent holes h are provided on the lateral sides of the frame 40', preferably on the lateral sides close to the corners of the frame 40' to be open in different directions. As the vent holes h are provided on the lateral sides of the frame 40' to be open in different directions, even if an air adsorbent 500 enters the vent holes h, it does not block the air flow between the resonance space R and the empty space G between the magnetic module 20 and the vibration module 30.

As seen from the above description, the present invention suggests various solutions for solving the problems of reducing the lifespan of the micro-speaker due to the movement of the air adsorbent, unlike the prior art. The above description is intended to assist better understanding of the implementation of the present invention, and the scope of the present invention is not limited to any specific embodiment thereof.

## Claims

1. A micro-speaker, comprising:
a vibration module including at least a diaphragm and a voice coil;
a magnetic module defining an empty space, adjoining the vibration module, and including at least a yoke and a magnet;
an enclosure defining a resonance space therein and accommodating the vibration module and the magnetic module;
a vent hole creating communication between the resonance space and the empty space between the vibration module and the magnetic module;
an air adsorbent disposed at least on one side of the resonance space and composed of a plurality of grains; and
a means for preventing inflow of the air adsorbent, that prevents the air adsorbent from entering the vent hole.

2. The micro-speaker as claimed in claim 1, wherein the vent hole is provided on the yoke.

3. The micro-speaker as claimed in claim 1, wherein the means for preventing inflow of the air adsorbent is a mesh type screen.

4. The micro-speaker as claimed in claim 1, wherein the means for preventing inflow of the air adsorbent is a spongy type screen.

5. The micro-speaker as claimed in claim 2, wherein the enclosure comprises a rear cover adjoining the yoke, and the means for preventing inflow of the air adsorbent is a rib structure protruding from the rear cover to the yoke.

6. The micro-speaker as claimed in claim 5, wherein the minimum distance between the rib structure and the yoke is greater than 0 mm and equal to or smaller than 0.1 mm.

7. The micro-speaker as claimed in claim 1, wherein the means for preventing inflow of the air adsorbent is a binder for binding the plurality of grains of the air adsorbent together in any one method selected from a mechanical method, chemical method, and adhesive method.

8. The micro-speaker as claimed in claim 7, wherein the binder is a mesh type pouch which mechanically covers and encloses the plurality of grains of the air adsorbent.

9. The micro-speaker as claimed in claim 7, wherein the binder is an adhesive material which adheres the plurality of grains of the air adsorbent together.

10. A method for inserting an air adsorbent into a micro-speaker, the micro-speaker including an enclosure, a speaker unit accommodated in the enclosure, a resonance space defined between the speaker unit and the enclosure, and an air adsorbent disposed at least on one side of the resonance space and composed of a plurality of grains, the method comprising:
putting the air adsorbent into a mold which is similar to the resonance space;
applying a binder to the air adsorbent in the mold to bind the plurality of grains of the air adsorbent together;
removing the mold; and
putting the air adsorbent with the bound grains into the enclosure.

11. A micro-speaker, comprising:
a vibration module including at least a diaphragm and a voice coil;
a magnetic module defining an empty space, adjoining the vibration module, and including at least a yoke and a magnet;
a frame accommodating and supporting at least one of the vibration module and the magnetic module;
an enclosure defining a resonance space therein and accommodating the vibration module, the magnetic module, and the frame; and
an air adsorbent disposed at least on one side of the resonance space and composed of a plurality of grains,
a plurality of vent holes being provided on the lateral sides of the frame to create communication between the resonance space and the empty space between the vibration module and the magnetic module.

12. The micro-speaker as claimed in claim 11, wherein at least one of the plurality of vent holes is open in a different direction from the other vent holes.
